Europäisches Patentamt
European Patent Office
Office européen des brevets

(11) Publication number: **0 261 869 A2**

(12) **EUROPEAN PATENT APPLICATION**

(21) Application number: 87308208.5

(51) Int. Cl.4: C08L 67/02

(22) Date of filing: 16.09.87

(30) Priority: 26.09.86 JP 228966/86
02.06.87 JP 139530/87

(43) Date of publication of application:
30.03.88 Bulletin 88/13

(84) Designated Contracting States:
BE DE FR GB IT NL

(71) Applicant: SUMITOMO CHEMICAL COMPANY, LIMITED
15 Kitahama 5-chome Higashi-ku
Osaka-shi Osaka 541(JP)

(72) Inventor: Inoue, Masakazu
162-24, Oaza Fukagawa Konan-cho
Koga-gun Shiga(JP)
Inventor: Asai, Kuniaki
8-8, Tanigawa-cho
Tandabayashi-shi Osaka(JP)
Inventor: Suzuki, Yasuro
1-9-1017, Yushudainishi
Ichihara-shi Chiba(JP)
Inventor: Sugimoto, Hiroaki
1-13-5, Kawanishi-cho
Takatsuki-shi Osaka(JP)

(74) Representative: Diamond, Bryan Clive et al
Gee & Co. Chancery House Chancery Lane
London WC2A 1QU(GB)

(54) **Synthetic resin composition containing a polyarylate and a polyester.**

(57) A synthetic resin composition comprises 55 to 98 wt% of a polyarylate prepared from a mixture of isophthalic and terephthalic acids or a derivative of either (molar ratio 1:9 to 9:1) and a bisphenol of formula:

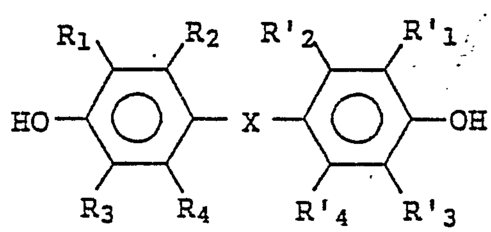

wherein -X-is -O-, $-SO_2-$, -CO-, -S-, an alkylene group or an alkylidene group; $R_1$, $R_2$, $R_3$, $R_4$, $R'_1$, $R'_2$, $R'_3$ and $R'_4$ are each hydrogen, halogen or a hydrocarbon group,
and 45 to 2 wt% of a heat-fusible wholly aromatic copolyester which is a thermotropic liquid crystal, of formula

EP 0 261 869 A2

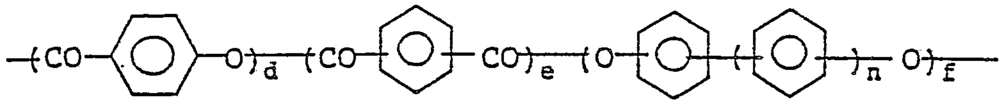

wherein d, e and f are each not zero but a positive integer that satisfies the conditions that d:e is 1.0 to 10.0 and e:f is 0.90 to 1.10; n is 0 or 1; and the substituents on each aromatic ring are para- or meta to one another.

The two components are blended,e.g. by melt mixing.

Additives can be included, such as fibers or fillers.

The polyarylate-based resin composition of the invention can provide molded articles, films, or fibers having high strength and elastic modulus, good melt-flow characteristics, and high surface gloss.

# SYNTHETIC RESIN COMPOSITION CONTAINING A POLYARYLATE AND A POLYESTER

The present invention relates to a polyarylate-based resin composition. More particularly, the present invention relates to a polyarylate based resin composition comprising a polyarylate and a wholly aromatic copolyester and having improved mechanical properties (e.g., strength and elastic modulus) and melt-flow characteristics.

Polyarylates have better mechanical properties (e.g., high heat resistance and good strain recovery), as compared with general-purpose engineering plastics such as nylons, polybutylene terephthalate, polycarbonates, or polyacetals and active research and development efforts are being undertaken in connection therewith in high-technology industries such as electrical, electronic, automotive, and office-automation applications. In these fields, the requirements that should be met by resin materials have increased in both rigorousness and versatility, and a strong need exists for developing resin materials having high strength and elastic modulus properties. With a view to meeting this need, it has been proposed to produce resin compositions having high strength and elastic modulus properties by blending polyarylates with inorganic fibers such as glass or carbon fibers or organic fibers such as Aramid fibers.

Molded articles prepared from a resin composition made of polyarylates and reinforcing fibers have higher strength and elastic modulus than those prepared from polyarylates alone but, on the other hand, their surface gloss is reduced. In addition, fiber-reinforced polyarylate resin compositions have such low melt-flow characteristics that considerable difficulty is involved in molding them into thin-walled articles, and molding into films and fibers is practically impossible.

An object of the present invention is to provide a polyarylate-based resin composition capable of providing molded articles, films, or fibers having high strength and elastic modulus, good melt-flow characteristics, and high surface gloss.

The present inventors have undertaken continued studies on polyarylate-based resin compositions and have found that the stated object of the present invention can be attained by a polyarylate resin composition comprising a polyarylate and a wholly aromatic copolyester. The present invention has been accomplished based on this finding.

The present invention provides a polyarylate-based resin composition comprising from 55 to 98 wt% of a polyarylate prepared from a mixture of isophthalic acid or a derivative thereof and terephthalic acid or a derivative thereof as well as a bisphenol of the following formula:

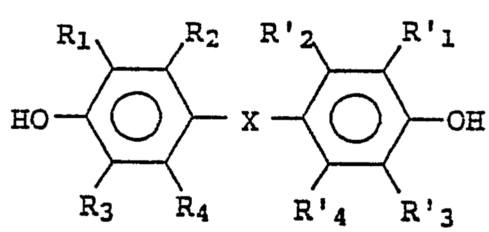

wherein -X-is the group -O-, $-SO_2-$, -CO-, -S-, an alkylene group or an alkylidene group; $R_1$, $R_2$, $R_3$, $R_4$, $R'_1$, $R'_2$, $R'_3$ and $R'_4$ are each selected from a hydrogen atom, a halogen atom and a hydrocarbon group, and from 45 to 2 wt% of a heat fusible wholly aromatic copolyester of the following formula:

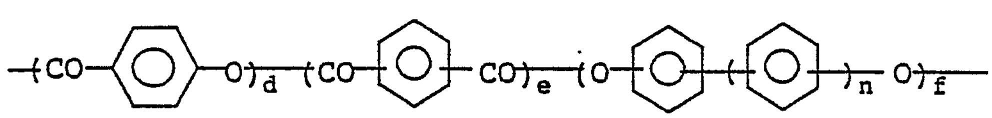

wherein d, e, and f are each not zero but a positive integer that satisfies the conditions that d/e is from 1.0 to 10.0 and e/f is from 0.90 to 1.10; n is 0 or 1; and the substituents on each aromatic ring are on the para- or meta-position to one another.

The polyarylate used in the present invention is one prepared by polycondensation of a mixture of iso phthalic acid or a derivative and terephthalic acid or a derivative thereof and a bisphenol of the following formula:

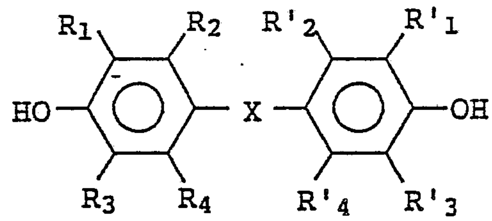

wherein -X-is -O-, $-SO_2-$, -CO-, -S-, an alkylene group having preferably from 1 to 4 carbon atoms (e.g., a methylene group, an ethylene group or a propylene group ) or an alkylidene group having preferably from 1 to 4 carbon atoms (e.g., an ethylidene group, a propylidene group or an isopropylidene group ) $R_1$, $R_2$, $R_3$, $R_4$, $R'_1$ , $R'_2$ , $R'_3$ and $R'_4$ are each a hydrogen atom, a halogen atom (e.g., a chlorine atom or a bromine atom ) and a hydrocarbon group (e.g., a methyl or ethyl group).

Examples of the isophthalic acid derivative and terephthalic acid derivative include dihalides (e.g., dichloride) of isophthalic acid or terephthalic acid and esters, such as dialkyl (e.g., dimethyl or diethyl) esters and diaryl (e.g., diphenyl) esters, of isophthalic acid or terephthalic acid.

A suitable molar ratio of the mixture of terephthalic acid or isophthalic acid to bisphenol is 0.9:1 to 1.1:1.

As the method for production of such a polyarylate, there have been known various methods such as a so-called interfacial polymerization method in which an aromatic dicarboxylic acid chloride dissolved in an organic solvent that is incompatible with water is mixed and reacted with a bisphenol dissolved in an alkaline aqueous solution (see W.M. Ereckson, J. Poly. Sci., XL, 399 (1959) and Japanese Patent Publication No. 1959/65); a solution polymerization method in which an aromatic dicarboxylic acid chloride and a bisphenol are reacted in an organic solvent (see A. Conix, Ind. Eng. Chem., 51 , 147 (1959) and Japanese Patent Publication No. 5599/62); a melt polymerization method in which an aromatic dicarboxylic acid and a bisphenol are heated in the presence of acetic anhydride; a melt polymerization method in which a phenyl ester of an aromatic dicarboxylic acid and a bisphenol are heated (see Japanese Patent Publication No. 15247/63); and a melt polymerization method in which an aromatic dicarboxylic acid and a bisphenol are heated in the presence of a diaryl carbonate (see Japanese Patent Publication No. 28119/68).

In order to attain a balance between the moldability and physical properties of the polyarylate, the proportions of its acid components are preferably selected to be at such a value that the molar ratio of the terephthalic acid group to the isophthalic acid group is in the range of from 1/9 to 9/1, more preferably from 3/7 to 7/3, and most preferably at about 5/5.

Examples of such bisphenols include 2,2-bis(4-hydroxyphenyl)propane, 4,4' dihydroxy 3,3' dimethyl-diphenyl ether, 4,4'-dihydroxy-3,3'-dichlorodiphenyl ether, 4,4'-dihydroxy-diphenyl sulfide, 4,4'-dihydroxy-diphenyl-sulfone, 4,4'-dihydroxy-diphenyl ketone, bis(4-hydroxy-phenyl)methane, 1,1-bis(4-hydroxyphenyl)-methane, 1,1-bis-(4-hydroxyphenyl)-n-butane, di(4-hydroxyphenyl)cyclohexylmethane, 1,1-bis(4-hydroxyphenyl)-2,2,2-trichloroethane, 2,2-bis(4-hydroxy-3,5-dibromophenyl)propane, and 2,2-bis-(4-hydroxy-3,5-dichlorophenyl)propane, with 2,2-bis(4-hydroxyphenyl)propane, generally called "bisphenol A", being most preferred.

The wholly aromatic copolyester used in the present invention is a heat-fusible wholly aromatic copolyester of the following formula:

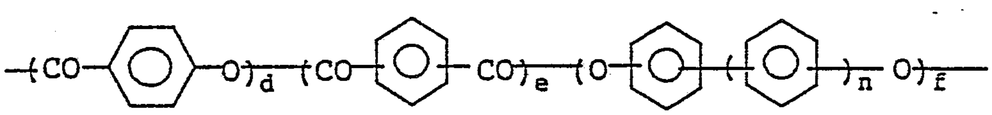

wherein d, e, and f are each not zero but a positive integer that satisfies the conditions that d/e is from 1.0 to 10.0 and e/f is from 0.90 to 1.10; n is 0 or 1; and the substituents on each aromatic ring are on the para- or meta-position to one another. Preferably, d/e is from 1.5 to 3.5 because higher heat resistance with better heat fusibility can be attained. The wholly aromatic copolyester having the formula noted above can be prepared by the methods as disclosed in Japanese Patent Applications (OPI) Nos. 104932/81 and 44622/82, but the present invention is not intended to be limited thereto. (The term "OPI" as used herein means an unexamined published application.)

The resin composition of the present invention is such that the polyarylate constitutes from 55 to 98 wt%, and the wholly aromatic copolyester from 45 to 2 wt%, of the sum of these two components. If the polyarylate content exceeds 98 wt%, namely, if the content of the wholly aromatic copolyester is less than 2 wt%, there will be no appreciable improvement in the mechanical properties.of the resin composition. If the polyarylate content is less than 55 wt%, namely, if the content of the wholly aromatic copolyester exceeds 45 wt%, the elastic modulus and meltflow characteristics of the resin composition will be appreciably improved but, on the other hand, it becomes brittle because of decreased strength. Preferably, the contents of the polyarylate and wholly aromatic copolyester are in the ranges of from 65 to 90 wt% and from 35 to 10 wt%, respectively because remarkable improvements are thus attained in strength and elastic modulus of the resin composition

A means of blending the starting resin components for producing the resin composition of the present invention is not particularly limited in any way. The polyarylate and the wholly aromatic copolyester may be fed separately into a melt mixing machine. Alternatively, the starting resin components may be mixed preliminarily in a suitable apparatus such as a Henschel mixer, a ball mill, or a ribbon blender, the resulting blend being then fed into a melt mixing machine.

To an extent that will not impair the objects of the present invention, the resin composition of the present invention may incorporate one or more commonly employed additives such as antioxidants, heat stabilizers, ultraviolet light absorbers, lubricants, releasing agents, coloring agents (e.g., dyes and pigments), flame retardants, auxiliary flame retardants, and antistats. In molding applications, a resin composition having an even higher strength and elastic modulus can be attained by incorporating inorganic fibers (e.g., glass or carbon fibers) or organic fibers (e.g., Aramid fibers) in the resin composition of the present invention. It is also possible to incorporate fillers or reinforcing agents (e.g., clay, mica, talc, graphite, glass beads, alumina, calcium carbonate, and potassium titanate fibers) in the resin composition of the present invention in amounts that should be varied in accordance with a specific use.

The wholly aromatic copolyester used in the present invention is a thermotropic liquid crystal polymer that has a rigid molecular structure and exhibits liquid crystal properties at elevated temperatures. Because of their rigid molecular structures and the liquid crystal properties in which the molecules are oriented in one direction, thermotropic liquid crystal polymers are known to exhibit extremely high strength and elastic modulus in the orienting direction while displaying very high fluidity in their liquid crystal temperature ranges.

, If the proportion of the wholly aromatic copolyester is no more than 45 wt% of the resin composition comprising a polyarylate and a wholly aromatic copolyester, the wholly aromatic copolyester is uniformly dispersed in the polyarylate in a highly oriented manner. This allows the polyarylate to be reinforced with the wholly aromatic copolyester, and the resulting resin composition exhibits as high strength and elastic modulus as is attained when the polyarylate is blended with inorganic or organic fibers. The reinforcing effect of the wholly aromatic copolyester is not attained if its content is less than 2 wt% of the resin composition. The wholly aromatic copolyester is a thermoplastic resin and will not cause the problem of low melt-flow characteristics or reduced surface gloss on molded articles unlike the case of resin compositions containing inorganic or organic fibers. If the proportion of the wholly aromatic copolyester exceeds 45 wt% of the resin composition, the latter still exhibits high elastic modulus but its strength is reduced because of unevenness in dispersion of the wholly aromatic copolyester in the resin composition.

According to the present invention, a specified polyarylate and a specified wholly aromatic copolyester are mixed in specified proportions, whereby a polyarylate-based resin composition which can provide molded articles, films, or fibers having high strength and elastic modulus, good melt-flow characteristics, and high surface gloss are produced.

As shown later in Examples 1 to 6 and Comparative Examples 1 to 4, the resin compositions prepared in accordance with the present invention (Examples 1 to 6) satisfy all of the requirements for good mechanical properties, high surface gloss, and good melt-flow characteristics and, hence, are superior to the resin composition that are outside the scope of the present invention, namely samples prepared in Comparative Examples 1, 2 and 4 and a sample prepared in Comparative Example 3 by a prior art technique. The resin compositions prepared in Examples 7 and 8 exhibit superior spinning stability and produce high-strength fibers as compared with samples prepared in Comparative Examples 5 and 6 according to formulations that are outside the scope of the present invention.

The following examples are provided for the purpose of further illustrating the present invention.

REFERENTIAL EXAMPLE 1

Preparation of Wholly Aromatic Copolyester A :

A polymerization vessel equipped with comb-shaped agitating blades was charged with 7.20 kg (40 moles) of p-acetoxybenzoic acid, 2.49 kg (15 moles) of terephthalic acid, 0.83 kg (5 moles) of isophthalic acid, and 5.45 kg (20.2 moles) of 4,4′ diacetoxydiphenyl. The contents were heated under agitation in a nitrogen atmosphere, and polymerization was conducted at 330°C for 3 hours, with the resulting acetic acid being removed and the agitating blades rotating at a high speed. Thereafter, the reaction mixture was slowly cooled, and a prepolymer was recovered from the reaction system at 200°C. The yield of the prepolymer was 10.38 kg, which was 97.8% of the theoretical value. The prepolymer was ground to particles (≤2.5 mm) with a hammer mill made by Hosokawa Micron Co., Ltd. The particles were treated in a rotary kiln at 280°C in a nitrogen atmosphere for 5 hours to obtain particulate wholly aromatic copolyester A having a flow temperature of 326°C. The flow temperature as referred to herein is defined as a temperature at which when a sample is heated at a rate of 4°C/min under a pressure of 100 kg/cm$^2$, it is fluidized through a nozzle (1 mmØ, 10 mm $^L$) to acquire an apparent viscosity of 48,000 poises. When the wholly aromatic copolyester A was heated at a rate of 25°C/min a heating stage, it was observed to exhibit optical anisotropy at 350°C or higher under polarization.

REFERENTIAL EXAMPLE 2

Preparation of Wholly Aromatic Copolyester B:

Using 7.2 kg (40 moles) of p-acetoxybenzoic acid, 3.32 kg (20 moles) of terephthalic acid, and 5.45 kg (20.2 moles) of 4,4′-diacetoxydiphenyl, polymerization was conducted as in Referential Example 1 to produce a prepolymer. The prepolymer was then ground to particles and treated at 280°C in a nitrogen atmosphere for 3 hours to obtain particulate wholly aromatic copolyester B. The wholly aromatic copolyester B had a flow temperature of 325°C and was observed to exhibit optical anisotropy at 355°C or higher.

EXAMPLES 1 TO 4

The wholly aromatic copolyester A prepared in Referential Example 1 and a polyarylate (U-Polymer® U-100, a product of Unitika Ltd.) of the formula:

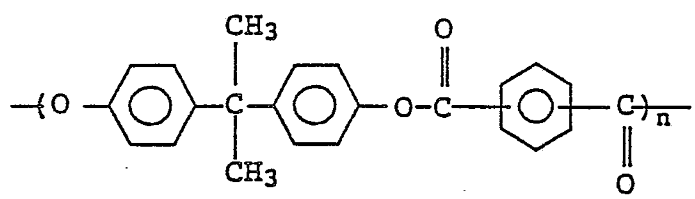

were mixed in proportions as shown in Table 1, and each of the mixtures was shaped into pellets by kneading and granulation at 340°C through a twin-screw extruder (Model PCM-30, manufactured by Ikegai Iron Works, Ltd.). The pellets were molded with a 1-oz injection molding machine (Model Neomat® 47/28, manufactured by Sumitomo Heavy Industries, Ltd.) to form specimens for tensile and bending tests. The molding conditions were as follows: cylinder temperature, 360°C; injection pressure, 1,500 kg/cm$^2$; injection speed, medium; and mold temperature, 120°C.

Tensile and bending tests were conducted in accordance with ASTM D-638 and ASTM D-790, respectively. Melt-flow characteristics were evaluated in terms of the bar flow length, or the flow distance over which the pellets flowed when they were injected into a mold having a thickness of 0.7 mm and a width of 8 mm under the molding conditions specified above. The appearance of the molded article was checked visually. The results of testings are shown in Table 1.

COMPARATIVE EXAMPLES 1 AND 2

Pellets and test specimens of resin composition were prepared as in Examples 1 to 4. The results of testings are shown in Table 1.

COMPARATIVE EXAMPLE 3

The polyarylate used in Examples 1 to 4 was mixed with glass fibers (CS03 MAPX-1, a product of Asahi Fiber Glass Co., Ltd.) in proportions as shown in Table 1. The resulting resin compositions were subjected to the same testings as in Examples 1 to 4. The results are shown in Table 1.

EXAMPLES 5 AND 6 AND COMPARATIVE EXAMPLE 4

The same procedures as in Examples 1 to 4 were repeated except that the wholly aromatic copolyester A was replaced by the wholly aromatic copolyester B prepared in Referential Example 2. The results of testings conducted on the resin compositions prepared are shown in Table 2.

TABLE 1

| | Composition (wt%) | | | Tensile characteristics | | | Bending characteristics | | | |
|---|---|---|---|---|---|---|---|---|---|---|
| | Poly-arylate | Wholly aromatic copoly-ester A | Glass fiber | Strength (kg/cm$^2$) | Elastic modulus (kg/cm$^2$) | Elon-gation (%) | Strength (kg/cm$^2$) | Elastic modulus (kg/cm$^2$) | Bar flow length (cm) | Appear-ance* |
| Example 1 | 98 | 2 | - | 635 | 16,900 | 80 | 880 | 21,000 | 7 | A |
| " 2 | 90 | 10 | - | 700 | 17,400 | 80 | 950 | 21,000 | 7 | A |
| " 3 | 70 | 30 | - | 1,100 | 26,400 | 20 | 1,000 | 24,900 | 7.5 | A |
| " 4 | 60 | 40 | - | 900 | 30,000 | 10 | 920 | 32,400 | 8 | A |
| Comparative Example 1 | 50 | 50 | - | 500 | 41,000 | 6 | 750 | 34,000 | 12 | B |
| " 2 | 100 | - | - | 600 | 16,200 | 80 | 850 | 20,600 | 7 | A |
| " 3 | 85 | - | 15 | 1,050 | 28,000 | 9 | 1,100 | 39,000 | 4 | C |

*: Criteria for appearance rating

A: smooth surface with high gloss

B: some flow marks present

C: extensive flow marks and no surface gloss

TABLE 2

| | Composition (wt%) | | Tensile characteristics | | | Bending characteristics | | Bar flow length (cm) | Appearance* |
|---|---|---|---|---|---|---|---|---|---|
| | Polyarylate | Wholly aromatic copolyester B | Strength ($kg/cm^2$) | Elastic modulus ($kg/cm^2$) | Elongation (%) | Strength ($kg/cm^2$) | Elastic modulus ($kg/cm^2$) | | |
| Example 5 | 90 | 10 | 680 | 17,000 | 50 | 950 | 20,600 | 7 | A |
| " 6 | 70 | 30 | 900 | 24,800 | 10 | 980 | 22,000 | 7.5 | A |
| Comparative Example 4 | 50 | 50 | 560 | 39,500 | 5 | 810 | 31,200 | 10 | B |

*: For the criteria of appearance rating, see the notes to Table 1.

EXAMPLES 7 AND 8

The wholly aromatic copolyester A prepared in Referential Example 1 and the polyarylate used in Examples 1 to 4 were mixed in proportions as shown in Table 3, and each of the mixtures was shaped into pellets by kneading and granulation as in Examples 1 to 4. The pellets were fed into a screw type extruder (30 mmØ) and extruded therefrom at 365°C through a spinning nozzle (hole diameter, 0.12 mm; hole length, 0.36 mm; number of holes, 128). The melt-spun filaments were passed through a cooling box below the spinnerette, quenched as they were running through a water bath positioned 1.5 m below the spinnerette, and then taken up at the end of the water bath. Consistent spinning could be achieved, and the minimum diameters and breaking strengths of the produced filaments are shown in Table 3. Measurement of fiber's breaking strength was conducted on a 20-mm long specimen at a tensile speed of 2 mm/min.

COMPARATIVE EXAMPLES 5 AND 6

Pellets of resin compositions were prepared and subjected to melt spinning as in Examples 7 and 8. The results of measurement of fiber characteristics are also shown in Table 3.

TABLE 3

| | Composition (wt%) | | | | |
|---|---|---|---|---|---|
| | Polyarylate | Wholly aromatic copolyester A | Minimum fiber diameter (μm) | Breaking strength ($kg/mm^2$) | Spinning stability* |
| Example 7 | 90 | 10 | 33 | 53 | ○ |
| " 8 | 70 | 30 | 35 | 78 | ○ |
| Comparative Example 5 | 100 | - | 35 | 37 | × |
| " 6 | 50 | 50 | 80 | 38 | △ |

* ○: very good

△: fair

×: poor

**Claims**

1. A polyarylate-based resin composition comprising (a) from 55 to 98 wt% of a polyarylate prepared from a mixture of isophthalic acid or a derivative thereof and terephthalic acid or a derivative thereof as well as a bisphenol of the following formula:

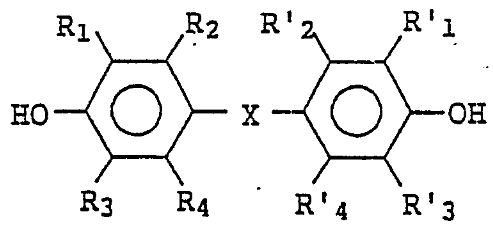

wherein -X-is -O-, $-SO_2-$, -CO-, -S-, an alkylene group, or an alkylidene group; $R_1$, $R_2$, $R_3$, $R_4$, $R'_1$, $R'_2$, $R'_3$ and $R'_4$ are each selected from a hydrogen atom, a halogen atom and a hydrocarbon group,

and (b) from 45 to 2 wt% of a heat-fusible wholly aromatic copolyester of the following formula:

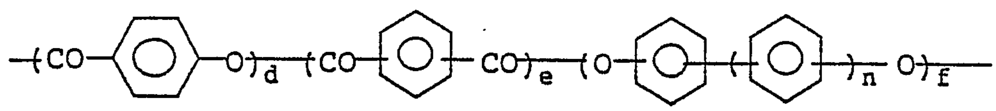

wherein d, e, and f are each not zero but a positive integer that satisfies the conditions that d/e is from 1.0 to 10.0 and e/f is from 0.90 to 1.10; n is 0 or 1; and the substituents on each aromatic ring are on the para- or meta-position to one another.

2. A composition as claimed in Claim 1, comprising from 65 to 90 wt% of said polyarylate and from 35 to 10 wt% of said wholly aromatic copolyester.

3. A composition as claimed in Claim 1 or 2, wherein with respect to said mixture of isophthalic acid or a derivative thereof and terephthalic acid or a derivative thereof, the molar ratio of the terephthalic acid group to the isophthalic acid group is from 1:9 to 9:1.

4. A composition as claimed in Claim 3, wherein said molar ratio of the terephthalic to isophthalic acid group is from 3:7 to 7:3.

5. A composition as claimed in Claim 4, wherein said molar ratio is about 5:5.

6. A composition as claimed in any preceding claim, wherein said bisphenol is 2,2-bis(4-hydroxyphenyl)propane.

7. A composition as claimed in any preceding claim, wherein with respect to said wholly aromatic copolyester, the proportion of d to e is from 1.5 to 3.5.

8. A molded product made from a composition according to any preceding claim, optionally including additives such as inorganic or organic fibers or fillers or reinforcing agents.